# DEMANDE DE BREVET EUROPEEN

(11) **EP 1 232 784 A1**
(43) Date de publication de la demande: **21.08.2002**
(21) Numéro de dépôt: 02290052.6
(22) Date de dépôt: 10.01.2002
(51) Int. Cl.: B01F 3/04, B01F 7/16, B01F 15/00, C02F 3/16, B03D 1/16

(54) **Dispositif de diffusion d'un gaz dans un liquide par une turbine à ailettes**

(30) Priorité: 14.02.2001 FR 0101985
(71) Demandeur: Ponthieu, Georges, 78570 Chanteloup les Vignes (FR)
(72) Inventeur: Ponthieu, Georges, 78570 Chanteloup les Vignes (FR)
(74) Mandataire: Colas des Francs, Jean

(57) **Abrégé**

Dispositif aérateur mixeur destiné à diffuser un gaz dans un liquide.

Il comprend un moteur (1), une boite à vent (2) et un plateau (9) équipé d'ailettes dont certaines (11) sont prolongées vers le haut (16) à l'intérieur de l'ouverture d'alimentation en gaz de la turbine, cette disposition assurant un nettoyage de la turbine au niveau de ladite ouverture.

Application au traitement d'effluents aqueux contenant des solides en suspension ainsi qu'au dégraissage et deshuilage d'effluents aqueux.

## Description

La présente invention concerne un dispositif aérateur mixeur, destiné à introduire un gaz tel que de l'oxygène ou de l'air, par l'intermédiaire d'une turbine de diffusion et brassage, dans une masse liquide statique ou dynamique. Le dispositif a pour effet d'introduire ce gaz sous forme de microbulles dans la masse liquide sans nécessiter le recours à l'utilisation systématique d'un compresseur.

De tels systèmes sont généralement utilisés dans la mise en oeuvre de procédés biologiques, permettant l'introduction intense d'oxygène ou d'air dans la masse liquide d'un effluent à purifier et assurant une oxydation directe dudit effluent afin de permettre aux bactéries aérobies de vivre et de se multiplier. Le dispositif a de nombreuses autres applications qui seront explicitées plus loin.

L'invention permet ainsi d'effectuer simultanément une diffusion dans une masse liquide à aérer et un brassage pouvant être plus ou moins violent selon le but recherché.

On connait déjà des dispositifs permettant d'introduire un gaz dans une masse liquide par l'intermédiaire d'une turbine ou de plusieurs turbines accouplées.

Ainsi le document FR-A-2 293 235 décrit un dispositif de ce type qui comprend un moteur d'entraînement et une turbine, ledit moteur d'entraînement étant prolongé par un arbre d'entraînement et relié de manière rigide à la partie supérieure d'une boite à vent traversée par ledit arbre d'entraînement, ladite boite à vent étant reliée latéralement à au moins une tubulure d'amenée de gaz et comportant une ouverture à sa partie inférieure pour laisser un passage audit gaz ainsi qu'à l'arbre d'entraînement, ladite turbine étant disposée en aval de ladite ouverture sur le trajet du gaz et destinée à être immergée dans ladite masse liquide et à être entraînée en rotation par l'arbre dudit moteur dont elle est solidaire, ladite turbine comprenant un plateau perpendiculaire à l'arbre du moteur et porteur d'une pluralité d'ailettes à sa surface supérieure, tournée vers la boite à vent, et d'une pluralité d'ailettes à sa surface inférieure.

Dans ce dispositif connu, les ailettes (aussi appelées pales) de la surface supérieure du plateau (celle en regard de la boite à vent) sont surmontées d'un second plateau circulaire, solidaire de l'arbre du moteur, et l'ouverture disposée à la partie inférieure de la boite à vent est de section circulaire constante sur toute sa hauteur.

Le document FR-A-2 732 236 décrit un dispositif similaire qui se distingue du précédent par le fait que des ailettes de grande longueur alternent avec des ailettes plus courtes et que les ailettes radiales de la turbine de diffusion prolongent latéralement les pales de la turbine de brassage jusque dans une zone de dépression relative située en arrière de la turbine. Un problème évoqué dans FR-A-2 732 236 est celui de particules qui se déposent à l'arrière des turbines et qui nécessitent un nettoyage de celles-ci. La solution proposée consiste à prévoir des ailettes appelées ailettes de décharge qui sont montées sur le second plateau circulaire. L'ensemble est relativement complexe et lourd.

Un problème qui n'est pas évoqué dans les documents ci-dessus a toutefois été mis en évidence par le présent inventeur : lorsque la masse liquide renferme des matières solides, celles-ci peuvent se déposer dans l'ouverture située à la partie inférieure de la boite à vent et peuvent y réduire la section utile de passage du gaz et même, à la longue, provoquer son obstruction.

Par ailleurs les dispositifs décrits dans les documents ci-dessus nécessitent l'accouplement de deux turbines, ce qui accroit le poids de l'ensemble et également son coût.

Un premier objet de l'invention est donc de proposer un dispositif qui permet de résoudre le problème de colmatage évoqué ci-dessus. Un autre objet est d'obtenir une diffusion améliorée du gaz sous forme de microbulles et donc d'améliorer et accélérer les réactions avec le gaz. Encore un autre objet est de réaliser un dispositif de construction plus simple et plus légère que ceux des documents précités puisqu'il n'est plus nécessaire de prévoir un second plateau surmontant les ailettes de diffusion du gaz.

Ces divers objets et d'autres qui apparaîtront par la suite sont obtenus par un dispositif d'introduction d'un gaz dans une masse liquide du type de celui décrit dans FR-A-2 293 235 mais qui en diffère sur plusieurs points importants.

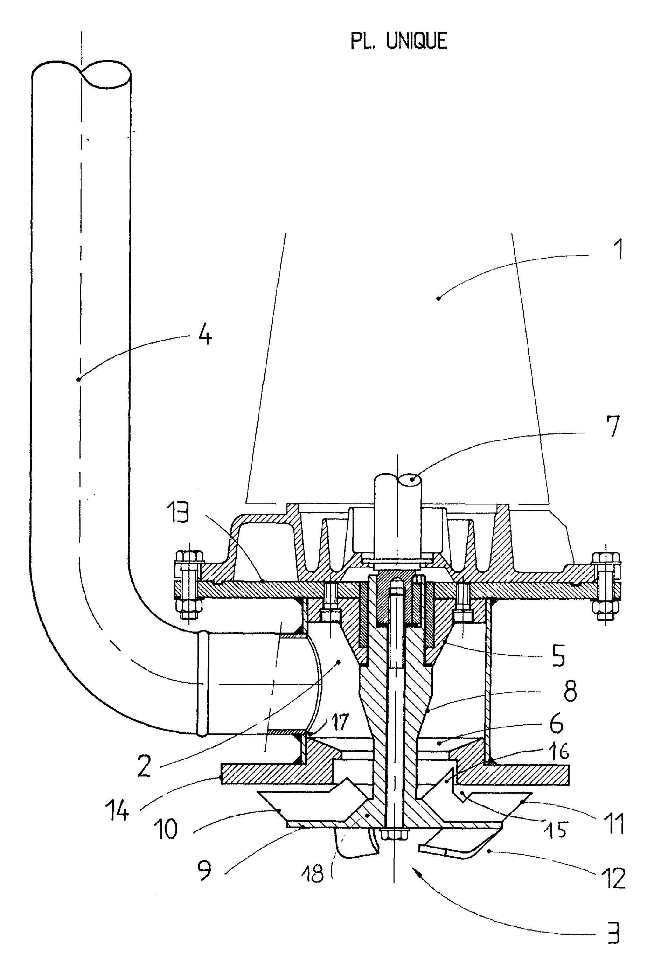

Dans ce qui suit, pour permettre une meilleure compréhension, on supposera, ce qui correspond d'ailleurs au mode de réalisation préféré, que l'arbre du moteur est vertical et que le moteur est au-dessus, et la turbine au-dessous, de la boite à vent. Les chiffres figurant entre parenthèses se rapportent au dessin.

Le dispositif de l'invention comprend donc un moteur d'entraînement (1), par exemple un moteur électrique, et une turbine (3), ledit moteur d'entraînement étant prolongé par un arbre d'entraînement (7) et relié de manière rigide à la partie supérieure d'une boite à vent (2) traversée par ledit arbre d'entraînement, ladite boite à vent étant reliée latéralement à au moins une tubulure (4) d'amenée de gaz et comportant une ouverture (6) à sa partie inférieure pour laisser un passage de sortie audit gaz ainsi qu'à l'arbre d'entraînement du moteur, ladite turbine étant disposée en aval de ladite ouverture sur le trajet du gaz et destinée à être immergée dans ladite masse liquide et à être entraînée en rotation par l'arbre d'entraînement dudit moteur dont elle est solidaire, ladite turbine comprenant un plateau (9) perpendiculaire à l'arbre du moteur et porteur d'une pluralité d'ailettes (10 et 11) à sa surface supérieure, tournée vers la boite à vent, et d'une pluralité d'ailettes (12) à sa surface inférieure.

Le dispositif de l'invention est caractérisé en ce que les ailettes de la surface supérieure du plateau sont fixées audit plateau par leurs arêtes inférieures et sont dépourvues d'un second plateau de liaison sur leurs arêtes supérieures, le plateau (9) de la turbine étant disposé à une distance de la boite à vent telle que les arêtes supérieures des ailettes de la surface supérieure du plateau soient maintenues à proximité de la face inférieure externe de la boite à vent et/ou d'une bride plus large prolongeant latéralement ladite face inférieure externe de la boite à vent, et en ce que l'une au moins des ailettes de la surface supérieure du plateau est prolongée vers le haut, dans sa partie située au-dessous de l'ouverture inférieure de la boite à vent, de manière à pénétrer dans ladite ouverture sur au moins une partie de la hauteur de cette ouverture. Cette partie de l'ailette, prolongée vers le haut (16), permet de dilacérer les matières solides éventuellement présentes dans cette ouverture. Cette partie prolongée a utilement une forme triangulaire se terminant en pointe vers le haut.

Dans une forme de réalisation préférée, la portion du fond de la boite à vent qui entoure l'ouverture permettant le passage du gaz et de l'arbre du moteur est au moins en partie en forme de tronc de cône (6) se rétrécissant vers le bas jusqu'à ladite ouverture, de manière à orienter le gaz issu de ladite boite à vent préférentiellement vers le centre du plateau et améliorer la dispersion du gaz sous forme de microbulles. Avec cette disposition, la pente ascendante du tronc de cône correspond de préférence à un angle de 15 à 50 degrés par rapport à l'horizontale. De plus on préfère que la portion du fond de la boite à vent qui entoure l'ouverture ait en totalité la forme précitée en tronc de cône, le sommet latéral (17) du tronc de cône coïncidant de préférence avec la partie inférieure de l'ouverture de la tubulure de gaz dans la boite à vent.

Dans une autre forme préférée de mise en oeuvre de l'invention, il est prévu sur l'arbre du moteur et/ou sur une ou plusieurs bagues qui entoutent cet arbre, dans la boite à vent, une série d'épaulements ou diffuseurs (5,8) qui permettent d'accroître la section utile pour le passage du gaz dans la boite à vent, du haut vers le bas de celle-ci, et, en coopération avec l'ouverture de la partie inférieure de la boite à vent en forme de tronc de cône, permettent d'orienter le gaz vers le centre du plateau de la turbine, ce qui améliore la dispersion du gaz sous forme de microbulles.

Dans une autre forme de réalisation préférée de l'invention, le plateau porteur d'ailettes porte à sa surface supérieure, tournée vers la boite à vent, une première pluralité d'ailettes radiales dites ailettes de diffusion et une seconde pluralité d'ailettes radiales dites ailettes de brassage, les ailettes de chaque type étant disposées en alternance une par une ou par groupes de plusieurs, les ailettes de brassage se distinguant des ailettes de diffusion en ce qu'elles comportent une échancrure (15) sur leur arête supérieure, dirigée vers le bas, réduisant leur hauteur sur une portion de leur longueur qui est située sous la face inférieure externe de la boite à vent et/ou de la bride qui la prolonge latéralement. Cette échancrure est de préférence située au voisinage de l'ouverture de la boite à vent. Cette échancrure permet notamment d'améliorer le brassage entre le gaz et la phase aqueuse. Les ailettes de diffusion ne présentent alors pas cette échancrure.

De préférence également, ce sont les ailettes de brassage qui comportent, outre l'échancrure ci-dessus, le prolongement en hauteur (16) mentionné plus haut, qui permet de réaliser une dilacération des matières solides.

La partie inférieure de l'arbre du moteur, au voisinage de sa liaison avec le plateau, est de préférence en forme de cône ou tronc de cône (18) s'élargissant vers le bas, et les arêtes internes (au voisinage de l'arbre du moteur) des ailettes de la surface supérieure du plateau s'appuient avantageusement sur ce cône ou tronc de cône. La pente de ce cône est avantageusement de 20 à 70 degrés par rapport à l'horizontale. Cette disposition favorise l'écoulement de l'air et ainsi la formation de microcrobulles.

Les ailettes situées à la surface inférieure du plateau unique de la turbine sont avantageusement radiales à leur base de jonction au plateau mais recourbées dans une direction perpendiculaire à celle de leur base radiale. Leur courbure est de préférence réalisée dans le même sens que le sens de rotation du plateau. Ces ailettes sont de préférence disposées en périphérie du plateau, par exemple seulement sur la moitié externe du rayon du plateau.

En se reportant à nouveau au dessin, le dispositif de l'invention comporte un moteur d'entraînement (1) et une turbine désignée globalement par (3). Le moteur entraîne en rotation un arbre (7), appelé indifféremment arbre moteur ou arbre de turbine, au bout duquel est placé un support d'ailettes circulaire unique (9), en forme de plateau, sur lequel sont disposées des ailettes de diffusion (10) ainsi que des ailettes de brassage (11). Afin d'éviter que les matières solides se déposent en fond de cuve, et également pour les remettre en suspension si elles se sont déjà déposées, des ailettes de brassage, de préférence courbées (12), sont disposées en dessous du support d'ailettes, permettant un brassage permanent dans ce même fond de cuve.

Le dispositif comprend une boite à vent (2), alimentée par une prise de gaz (4) et fixée rigidement au moteur, directement ou par l'intermédiaire d'une bride (13) ou équivalent. La boite à vent repose sur une bride (14) qui s'étend latéralement au-delà des ailettes et les recouvre en étroite proximité mais sans contact direct.

Afin de permettre une meilleure pénétration du gaz aspiré, un diffuseur (6) en forme de tronc de cône se rétrécissant vers le bas (vers l'aval dans le sens d'écoulement du gaz) est disposé autour de l'ouverture de sortie de la boite à vent (2). De préférence on prévoit des diffuseurs supplémentaires. Ainsi, par exemple, un premier diffuseur (5) est disposé en haut de la boite à vent, sous la forme d'une bague, et un autre plus bas directement sur l'arbre de la turbine et du moteur (8).Le premier est constitué ici par une bague tronconique entourant l'arbre du moteur tandis que le second est constitué par une simple réduction du diamètre de l'arbre joignant le moteur à la turbine.

L'ailette de brassage (11) comporte une échancrure (15) et un prolongement (16) à l'intérieur de l'ouverture de la boite à vent. Le sommet latéral (17) du tronc de cône coïncide de préférence avec la partie inférieure de l'ouverture latérale d'admission du gaz.

Sur la figure, la portion (16) de l'ailette (11) ne pénètre dans le passage de décharge de la boite à vent que sur une partie de la hauteur de ce passage. En variante, elle pourrait remonter plus haut et même pénétrer faiblement dans la boite à vent. Par ailleurs l'ailette (10) est représentée avec un épaulement pénétrant faiblement dans le passage de décharge de la boite à vent ; cette ailette pourrait également ne pas posséder cet épaulement et ne pas pénétrer ainsi dans ce passage.

Sur la figure, on a par simplification représenté deux ailettes de types différents en opposition, mais il est préférable quand on utilise au moins deux ailettes de chaque type de disposer les ailettes du même type en opposition, c'est-à-dire sur le même diamètre.

L'alternance des ailettes de diffusion et de brassage en partie supérieure de la turbine optimise :
la détente du liquide mis en pression,
l'accroissement du nombre de microbulles dans la masse liquide mise en mouvement, et
l'homogénéisation de la masse liquide à l'état dynamique.

L'homme de métier choisira la forme, le diamètre et le nombre d'ailettes en fonction notamment de la profondeur d'immersion et de la nature de l'effluent à traiter, afin d'optimiser l'inclusion des microbulles dans la masse liquide en mouvement. Le nombre total d'ailettes de chaque type peut être quelconque, au minimum une de chaque type et de préférence de 2 à 20 ou plus de chaque type.

La distance entre les ailettes et la partie inférieure de la boite à vent ou la bride qui la prolonge est de préférence faible, de l'ordre de 1 à 5 mm, afin de permettre à la quantité maximale de gaz de cheminer entre les ailettes et non au-dessus de celles-ci.

Il doit être entendu que l'invention ne se limite pas aux formes de réalisation décrites ci-dessus et qu'elle couvre également tous leurs équivalents.

Il doit également être entendu que les ailettes de chaque type ont chacune plusieurs fonctions et non pas seulement les fonctions respectives uniques de brassage et de diffusion. Parmi ces autres fonctions on peut citer la dilacération, l'aspiration et l'aération.

Parmi les nombreuses applications du dispositif de l'invention, on peut citer l'aéroflottation, l'épaississement des boues, la neutralisation, l'épuration biologique aérobie, le lagunage, la pisciculture, l'ostréiculture, la conchyliculture, ainsi que le dégraissage et le deshuilage d'effluents aqueux, le dispositif immergé libérant de très fines bulles permettant d'améliorer notablement le rassemblement en surface des graisses, écumes et toutes matières en suspension et la décantation de ces matières.

## Revendications

1. Dispositif permettant l'introduction d'un gaz dans une masse liquide, ce dispositif comprenant un moteur d'entraînement (1) et une turbine (3), ledit moteur d'entraînement étant prolongé par un arbre d'entraînement (7) et relié de manière rigide à la partie supérieure d'une boite à vent (2) traversée par ledit axe d'entraînement, ladite boite à vent étant reliée latéralement à au moins une tubulure (4) d'amenée de gaz et comportant une ouverture (6) à sa partie inférieure pour laisser un passage de sortie audit gaz ainsi qu'à l'arbre du moteur, ladite turbine étant disposée en aval de ladite ouverture sur le trajet du gaz et destinée à être immergée dans ladite masse liquide et à être entraînée en rotation par l'arbre dudit moteur dont elle est solidaire, ladite turbine comprenant un plateau (9) perpendiculaire à l'axe du moteur et porteur d'une pluralité d'ailettes (10 et 11) à sa surface supérieure, tournée vers la boite à vent, et d'une pluralité d'ailettes (12) à sa surface inférieure,
**caractérisé en ce que** les ailettes de la surface supérieure du plateau sont fixées audit plateau par leurs arêtes inférieures et sont dépourvues d'un plateau de liaison sur leurs arêtes supérieures, le plateau (9) de la turbine étant disposé à une distance de la boite à vent telle que les arêtes supérieures des ailettes de la surface supérieure du plateau soient maintenues à proximité de la face inférieure externe de la boite à vent et/ou d'une bride plus large prolongeant latéralement ladite face inférieure externe de la boite à vent, et **en ce que** l'une au moins des ailettes de la surface supérieure du plateau est prolongée vers le haut, dans sa partie située au-dessous de l'ouverture inférieure de la boite à vent, de manière à pénétrer dans ladite ouverture sur au moins une partie de la hauteur de cette ouverture.

2. Dispositif selon la revendication 1, **caractérisé en ce que** la portion du fond de la boite à vent qui entoure l'ouverture permettant le passage du gaz et de l'arbre du moteur est au moins en partie sous forme de tronc de cône (6) se rétrécissant vers le bas jusqu'à ladite ouverture, de manière à orienter le gaz issu de ladite boite à vent préférentiellement vers le centre du plateau.

3. Dispositif selon la revendication 2, **caractérisé en ce que** la pente ascendante du tronc de cône correspond à un angle de 15 à 50 degrés par rapport à l'horizontale.

4. Dispositif selon la revendication 2 ou 3, **caractérisé en ce que** le sommet latéral (17) du tronc de cône coïncide avec la partie inférieure de l'ouverture de la tubulure de gaz dans la boite à vent.

5. Dispositif selon l'une des revendications 1 à 4, **caractérisé en ce qu'**il est prévu, sur l'arbre du moteur et/ou sur une ou plusieurs bagues qui entourent cet arbre, dans la boite à vent, une série d'épaulements ou diffuseurs (5,8) qui permettent d'accroître la section utile pour le passage du gaz dans la boite à vent, du haut vers le bas de celle-ci, et d'orienter le gaz vers le centre du plateau de la turbine.

6. Dispositif selon l'une des revendications 1 à 5, **caractérisé en ce que** le plateau porteur d'ailettes porte à sa surface supérieure, tournée vers la boite à vent, une première pluralité d'ailettes radiales dites ailettes de diffusion et une seconde pluralité d'ailettes radiales dites ailettes de brassage, les ailettes de chaque type étant disposées en alternance une par une ou par groupes de plusieurs, les ailettes de brassage se distinguant des ailettes de diffusion **en ce qu'**elles comportent une échancrure (15) sur leur arête supérieure, dirigée vers le bas, réduisant leur hauteur sur une portion de leur longueur qui est située sous la face inférieure externe de la boite à vent et/ou de la bride qui la prolonge latéralement, cette échancrure étant située au voisinage de l'ouverture de la boite à vent.

7. Dispositif selon la revendication 6, **caractérisé en ce que** l'échancrure et le prolongement en hauteur sont portés seulement par les ailettes de brassage.

8. Dispositif selon l'une des revendications 1 à 7, **caractérisé en ce que** les ailettes situées à la surface inférieure du plateau de la turbine sont radiales à leur base de jonction au plateau mais sont recourbées dans une direction perpendiculaire à celle de leur base radiale, la courbure étant réalisée dans le même sens que le sens de rotation du plateau.

9. Dispositif selon l'une des revendications 1 à 8, **caractérisé en ce que** la partie inférieure de l'arbre du moteur, au voisinage de sa liaison avec le plateau, est en forme de cône ou tronc de cône (18) s'élargissant vers le bas.

10. Dispositif selon la revendication 9, **caractérisé en ce que** les arêtes internes des ailettes de la partie supérieure du plateau s'appuient sur ledit cône ou tronc de cône.

11. Application du dispositif selon l'une des revendications 1 à 10 à l'aéroflottation, l'épaississement des boues,la neutralisation, l'épuration biologique aérobie, le lagunage, la pisciculture, l'ostréiculture et la conchyliculture.

12. Application du dispositif selon l'une des revendications 1 à 10 au dégraissage et au deshuilage des effluents aqueux, le dispositif immergé libérant de très fines bulles permettant d'améliorer notablement le rassemblement en surface des graisses, écumes et toutes matières en suspension et la décantation de ces matières.
